# FASCICULE DE BREVET EUROPEEN

(11) **EP 1 462 319 B1**
(45) Date de publication et mention de la délivrance du brevet: **08.07.2009**
(21) Numéro de dépôt: 04290344.3
(22) Date de dépôt: 10.02.2004
(51) Int. Cl.: B60R 21/02, B60N 2/36

(54) **Véhicule automobile muni d'une cloison escamotable pour pivotement dans le dossier d'un siège**
Kraftfahrzeug mit einer in den Sitz verschwenkbaren Trennwand
Vehicle with a partitioning wall which can be pivoted in the back of a seat

(30) Priorité: 25.03.2003 FR 0303623
(43) Date de publication de la demande: 29.09.2004
(73) Titulaire: Peugeot Citroën Automobiles S.A., 78140 Vélizy Villacoublay (FR)
(72) Inventeur: Devaux, Daniel, 77183 Croissy Beaubourg (FR); Calvet, Frédéric, 92500 Rueil Malmaison (FR)

(56) Documents cités:
- EP-A- 0 849 119
- DE-A- 3 705 059
- DE-A- 4 202 103
- DE-A- 10 214 252
- DE-U- 29 506 071
- FR-A- 2 353 417
- FR-A- 2 748 241

## Description

L'invention concerne en général les véhicules automobiles, et notamment les véhicules munis de hayons arrière.

Plus précisément, l'invention concerne un véhicule automobile comprenant un habitacle délimité en partie haute par un pavillon et divisé en une première partie et une seconde partie, un siège lié à la structure du véhicule et disposé dans la première partie, et une cloison escamotable isolant sélectivement la première partie de la seconde partie, le siège comprenant un dossier, ce dossier comprenant lui-même une plaque arrière, et un coussin disposé en regard de la plaque arrière et lié à cette plaque, ladite cloison escamotable comprenant un panneau sélectivement mobile entre une position de rangement dans laquelle le panneau est escamoté entre le coussin et la plaque arrière du dossier et une position d'isolement dans laquelle le panneau se dresse entre la plaque arrière et le pavillon.

Des dispositifs de ce type sont connus de l'art antérieur, et notamment des documents de brevet FR 2 657 054 et FR 2 748 241 qui révèlent des véhicules à hayon arrière comprenant une plaque coulissante relativement au dos du siège arrière. Cette plaque peut être escamotée dans le siège arrière ou venir isoler l'habitacle du coffre de façon à protéger les passagers des courants d'air et du froid quand le hayon arrière est ouvert.

Ces dispositifs présentent le défaut que le dispositif d'actionnement permettant de déplacer la plaque coulissante est un dispositif à poulie et courroie complexe, coûteux à monter et fragile.

Dans ce contexte, la présente invention a pour but de pallier le défaut mentionné ci-dessus.

A cette fin, le véhicule de l'invention, par ailleurs conforme à la définition générique qu'en donne le préambule ci-dessus, est essentiellement caractérisé en ce que le panneau passe de sa position de rangement à sa position d'isolement par pivotement relativement à une partie supérieure de la plaque arrière, le coussin étant mobile par pivotement relativement à une partie inférieure de la plaque arrière.

Dans un mode de réalisation possible de l'invention, le panneau est solidaire d'un premier axe monté à rotation sur un bord supérieur de la plaque arrière du dossier.

Avantageusement, le premier axe présente un premier axe de symétrie et comprend à une première extrémité axiale un orifice d'entraînement s'étendant selon le premier axe de symétrie, le véhicule comprenant un moteur de rotation, et un doigt s'étendant selon le premier axe de symétrie et entraîné en rotation par le moteur de rotation autour du premier axe de symétrie, ce doigt étant engagé dans l'orifice d'entraînement et coopérant avec celui-ci pour entraîner le premier axe en rotation .

De préférence, le coussin est monté à rotation sur la structure du véhicule par un deuxième axe parallèle au premier axe et disposé à proximité d'un bord inférieur de la plaque arrière.

Par exemple, le coussin comprend une armature et une première chape solidaire de l'armature et percée d'un premier orifice de verrouillage, le doigt étant mobile en translation suivant le premier axe de symétrie relativement à la structure du véhicule entre une position de verrouillage dans laquelle le doigt est engagé dans le premier orifice de verrouillage, et une première position de libération dans laquelle le doigt n'est pas engagé dans le premier orifice de verrouillage et le coussin peut pivoter autour du deuxième axe.

Avantageusement, la plaque arrière est articulée sur le deuxième axe par son bord inférieur et porte une seconde chape comprenant un second orifice de verrouillage, le doigt étant, dans sa position de verrouillage, engagé simultanément dans les premier et second orifices de verrouillage et dans l'orifice d'entraînement, et étant mobile en translation suivant le premier axe de symétrie jusqu'à une seconde position de libération dans laquelle le doigt n'est engagé dans aucun des premier et second orifices de verrouillage ni dans l'orifice d'entraînement, ce qui permet le basculement du dossier du siège.

Par exemple, dans sa première position de libération, le doigt est engagé dans le second orifice de verrouillage.

Avantageusement, le dossier comprend un piston sollicitant le coussin en rotation relativement à la partie inférieure de la plaque arrière, ce piston étant monté à rotation par une première extrémité sur l'armature du coussin par un premier axe de pivotement parallèle au premier axe de rotation, et étant monté à rotation par une seconde extrémité opposée à la première sur la plaque arrière par un second axe de pivotement parallèle au premier axe de rotation .

De préférence, le panneau est solidaire du premier axe par un bord de liaison, et, dans sa position de rangement, repose par un bord libre opposé au bord de liaison sur une troisième butée solidaire de la plaque arrière.

Par exemple, la plaque arrière comprend un joint fixé sur son bord supérieur, le coussin comprenant un joint complémentaire fixé à l'armature, ces joints étant mutuellement en contact quand le panneau est dans sa position de rangement, et étant plaqués sur deux faces mutuellement opposées du panneau quand celui-ci occupe sa position d'isolement .

D'autres caractéristiques et avantages de l'invention ressortiront clairement de la description qui en est faite ci-dessous, à titre indicatif et nullement limitatif, en référence aux figures annexées, parmi lesquelles :
- la figure 1 est une vue en coupe dans un plan vertical longitudinale d'une partie d'un véhicule selon l'invention, le panneau de la cloison escamotable étant en position de rangement,
- la figure 2 est une vue similaire à la figure 1 montrant le coussin du siège en position normale (traits mixtes) et en position basculée (traits pleins), et montrant le panneau en position de rangement (traits mixtes), en position intermédiaire (traits pleins) et en position d'isolement (traits mixtes),
- la figure 3 est une vue similaire à la figure 1, montrant le coussin en position normale et le panneau en position d'isolement,
- la figure 4 est une vue partielle en coupe horizontale transversale du siège et du dispositif d'actionnement de la plaque, considérer suivant l'incidence des flèches IV de la figure 1, le doigt du dispositif d'actionnement étant représenté dans sa position de verrouillage,
- la figure 5 est une vue similaire à la figure 4 montrant le doigt dans sa première position de libération et le coussin partiellement basculé,
- la figure 6 est une vue similaire à la figure 4 montrant le doigt dans sa position de verrouillage et le coussin partiellement basculé,
- la figure 7 est une vue similaire à la figure 4 montrant le doigt dans sa seconde position de libération et le dossier partiellement basculé,
- la figure 8 est une vue de la partie supérieure du dossier en coupe dans un plan vertical longitudinal, considérée suivant l'incidence des flèches VIII de la figure 4,
- la figure 9 est une vue similaire à la figure 8 considérée suivant l'incidence des flèches IX de la figure 4,
- la figure 10 est une vue similaire à la figure 8 considérée suivant l'incidence des flèches X de la figure 4, le panneau étant représentée en position de rangement,
- la figure 11 est une vue similaire à la figure 10, le panneau étant représentée en position d'isolement,
- la figure 12 est une vue agrandie d'un détail XII de la figure 1, et
- la figure 13 est une vue agrandie d'un détail XIII de la figure 2.

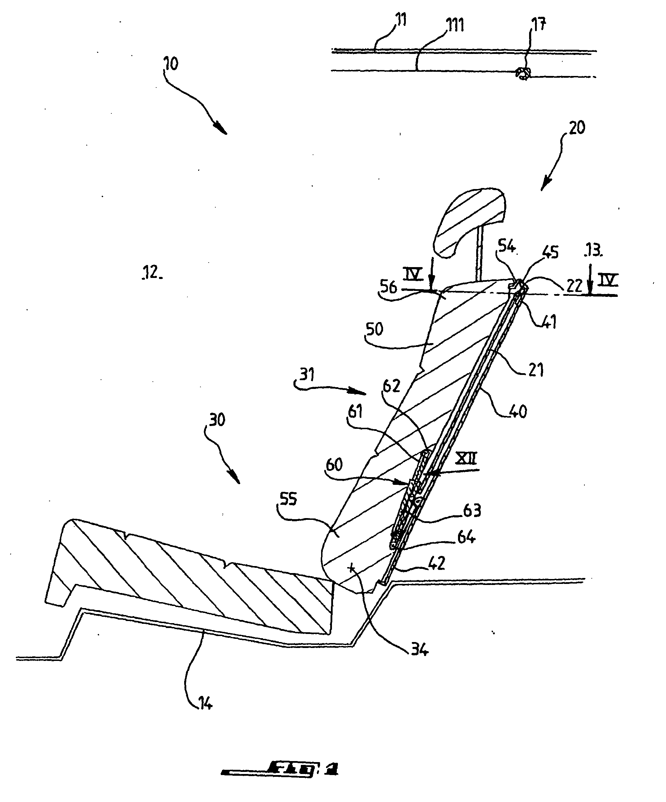

Le véhicule automobile représenté partiellement sur la figure 1 comprend un habitacle 10 délimité en partie haute par un pavillon 11 et divisé en une première partie 12 et une seconde partie 13, un siège 30 lié à la structure 14 du véhicule et disposé dans la première partie 12, et une cloison escamotable 20 isolant sélectivement la première partie 12 de la seconde partie 13.

Le siège 30 comprend une assise, non référencée, et un dossier 31 transversal se dressant verticalement, ou présentant une faible inclinaison par rapport à la verticale en position normale d'utilisation. L'élément de structure 14 auquel est fixé ce siège 30 est typiquement le châssis du véhicule.

Le dossier 31 comprend lui-même une plaque arrière 40, et un coussin 50 disposé en regard d'une face avant de la plaque arrière 40 et lié à cette plaque.

La cloison escamotable 20 comprend un panneau 21 sélectivement mobile entre une position de rangement dans laquelle le panneau 21 est escamoté entre le coussin 50 et la plaque arrière 40 du dossier, et une position d'isolement dans laquelle le panneau 21 se dresse entre la plaque arrière 40 et le pavillon 11.

La première partie 12 est typiquement la partie avant de l'habitacle 10, la seconde partie étant le coffre à bagage.

Le siège 30 est typiquement la banquette arrière du véhicule, de telle sorte que la plaque arrière 40 et le panneau 21 séparent complètement la partie avant de l'habitacle du coffre quand le panneau 21 est en position d'isolement.

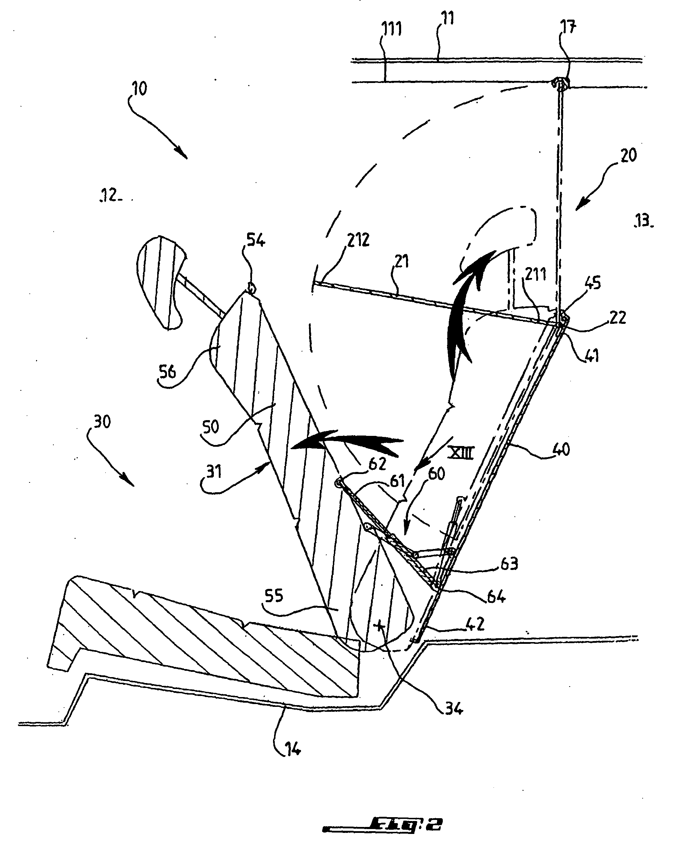

Selon l'invention, le panneau 21 passe de sa position de rangement à sa position d'isolement par pivotement relativement à une partie supérieure de la plaque arrière 40, le coussin 50 étant mobile par pivotement relativement à une partie inférieure de la plaque arrière 40, comme le montre clairement la figure 2.

Le coussin 50 bascule vers l'avant du véhicule, et passe ainsi de sa position normale d'utilisation à une position de dégagement qui autorise le débattement du panneau 21 par pivotement.

Le panneau 21 dans sa position de rangement est plaqué sur la face avant de la plaque arrière 40. Il pivote vers l'avant et vers le haut par rapport à la partie supérieure de la plaque 40, jusqu'à sa position d'isolation dans laquelle le panneau 21 est sensiblement vertical et transversal et dans laquelle il est disposé immédiatement au-dessus de la plaque arrière 40.

Dans cette position, un bord libre 212 transversal du panneau 21, arrive juste au ras du garnissage de pavillon 111.

On voit sur les figures 1 à 3 que le panneau 21 est solidaire, par un bord de liaison 211 parallèle et opposé au bord libre 212, d'un premier axe 22 transversal monté à rotation sur un bord supérieur 41 transversal de la plaque arrière 40, de telle sorte que le panneau 21 est presque entièrement à l'extérieur du dossier 31 dans sa position d'isolement. Le premier axe 22 s'étend sur toute la largeur transversale du dossier 31.

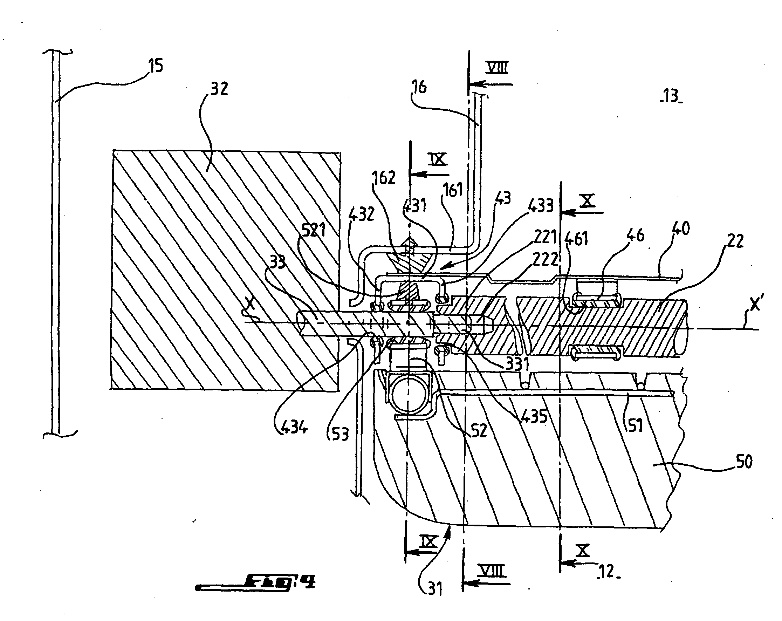

Comme le montre la figure 4, le premier axe 22 présente un premier axe de symétrie transversal X-X' et comprend à une première extrémité axiale 221 un orifice d'entraînement 222 borgne s'étendant selon le premier axe de symétrie X-X'.

Le véhicule est équipé de moyens d'actionnement du panneau 21 comprenant un moteur de rotation 32, et un doigt 33 s'étendant selon le premier axe de symétrie X-X' et entraîné en rotation par le moteur 32 autour du premier axe de symétrie X-X'.

Le moteur 32 est solidaire de la structure 14 du véhicule et disposé d'un côté latéral du dossier 31. Il est dissimulé entre une partie latérale 15 de la carrosserie du véhicule et l'habillage latéral 16.

Le doigt 33 fait saillie latéralement par rapport à l'habillage latéral 16. Dans une position dite de verrouillage, le doigt pénètre entre la plaque arrière 40 et le coussin 50 et est engagé dans l'orifice d'entraînement 222. Il coopère avec celui-ci pour entraîner le premier axe 22 en rotation, et donc pour faire pivoter le panneau 21.

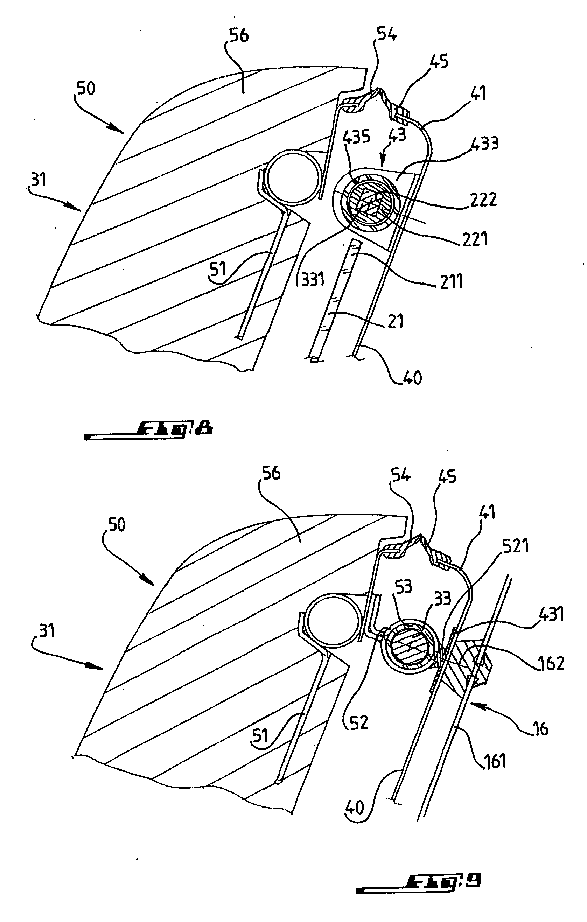

On voit sur la figure 8 que le doigt 33 présente une extrémité libre 331 de section carrée, perpendiculairement au premier axe de symétrie X-X'. Cette extrémité libre est engagée dans l'orifice d'entraînement 223, qui présente perpendiculairement au premier axe de symétrie X-X' une section carrée complémentaire de celle du doigt 33.

Le coussin 50 est monté à rotation sur la structure 14 du véhicule par un deuxième axe 34, transversal et parallèle au premier axe 22, cet axe étant disposé à proximité d'un bord inférieur 42 transversal de la plaque arrière 40 parallèle et opposé au bord supérieur 41.

Ce deuxième axe 34 traverse une partie inférieure 55 du coussin 50, de telle sorte que quand le coussin pivote vers sa position de dégagement sa partie inférieure 55 reste à proximité du bord inférieur 42 de la plaque arrière, tandis qu'une partie supérieure 56 du coussin s'écarte du bord supérieur 41 de la plaque arrière 40 vers l'avant.

Le coussin 50 comprend une armature 51 et de la mousse fixée sur l'armature 51, cette armature étant articulée sur le deuxième axe 34. Le coussin comprend également une première chape 52 solidaire de l'armature 51 et percée d'un premier orifice de verrouillage 53 cylindrique d'axe transversal.

En position normale du coussin 50, le premier orifice de verrouillage 53 est disposé immédiatement dans le prolongement de l'orifice d'entraînement 222, entre le moteur 32 et le premier axe 22, de telle sorte que l'orifice d'entraînement 222 et le premier orifice de verrouillage 53 sont coaxiaux.

Comme le montrent les figures 4 à 6, le doigt 33 est fixe en translation perpendiculairement au premier axe de symétrie X-X' relativement à la structure 14 du véhicule, et mobile en translation suivant le premier axe de symétrie X-X' entre la position de verrouillage dans laquelle le doigt 33 traverse le premier orifice de verrouillage 53 et est engagé dans l'orifice d'entraînement 222, et une première position de libération dans laquelle le doigt 33 n'est engagé ni dans le premier orifice de verrouillage 53 ni dans l'orifice d'entraînement 223.

Dans cette première position de libération, le coussin 50 peut pivoter autour du deuxième axe 34.

Un moteur de translation, non représenté, entraîne le doigt 33 en translation selon l'axe de symétrie X-X' par l'intermédiaire d'un dispositif à pignon et crémaillère connu en soi. Ce moteur est disposé au même endroit que le moteur de rotation 32.

La plaque arrière 40 est articulé elle aussi sur le deuxième axe 34 par son bord inférieur 42 et porte une seconde chape 43 en U présentant une partie centrale 431 solidaire de la face avant de la plaque 40, et des bras parallèles extérieur et intérieur 432 et 433 sensiblement verticaux et longitudinaux, percés respectivement d'un second orifice de verrouillage 434 et d'un orifice de blocage 435. Les deux bras font saillie vers l'avant à partir de la partie centrale 431.

Le second orifice de verrouillage 434 et l'orifice de blocage 435 sont circulaires et coaxiaux avec l'orifice d'entraînement 222.

La première extrémité axiale 221 du premier axe 22 présente un diamètre réduit par rapport à la partie centrale de l'axe et est engagée dans l'orifice de blocage 435. Un épaulement, non référencé, sépare cette première extrémité axiale 221 de la partie centrale et bloque le premier axe 22 en translation latérale vers les moteurs. Une bague en caoutchouc, non référencée, est interposée entre la première extrémité axiale 221 et l'orifice de blocage 435.

En position normale du coussin 50, la première chape 52 est disposée entre les deux bras 432 et 433 de la seconde chape 43, de telle sorte que le second orifice de verrouillage 434 est disposé entre le premier orifice de verrouillage 53 et le moteur 32. Les quatre orifices 434, 53, 435 et 222 sont alors alignés et coaxiaux.

Le doigt 33, dans sa position de verrouillage, est engagé successivement dans le second orifice de verrouillage 434, dans le premier orifice de verrouillage 53, et dans l'orifice d'entraînement 222.

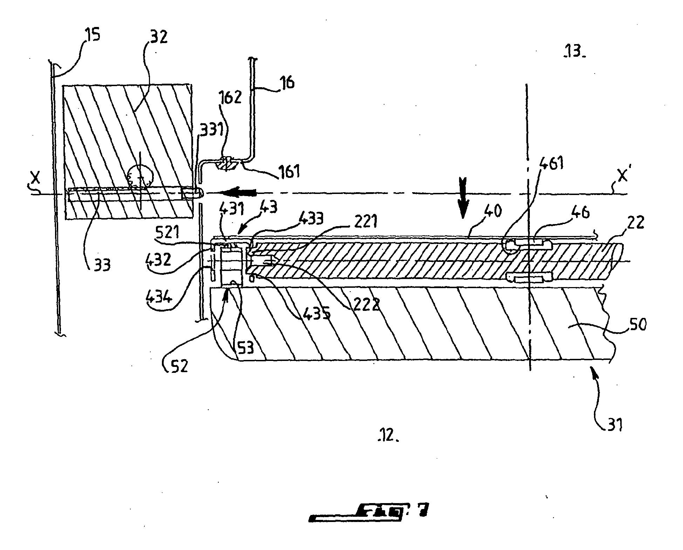

Le doigt 33 est sélectivement déplacé en translation suivant le premier axe de symétrie X-X' par le moteur de translation, depuis sa position de verrouillage jusqu'à une seconde position de libération, représentée sur la figure 7, dans laquelle ce doigt 33 n'est engagé dans aucun des premier et second orifices de verrouillage 53 et 434 ni dans l'orifice d'entraînement 222.

Dans cette position, le dossier 31 complet du siège 30, c'est-à-dire la plaque arrière et le coussin, peut basculer vers l'avant. Le panneau 21, qui, dans sa position de rangement est escamoté dans le dossier 31, bascule avec celui-ci.

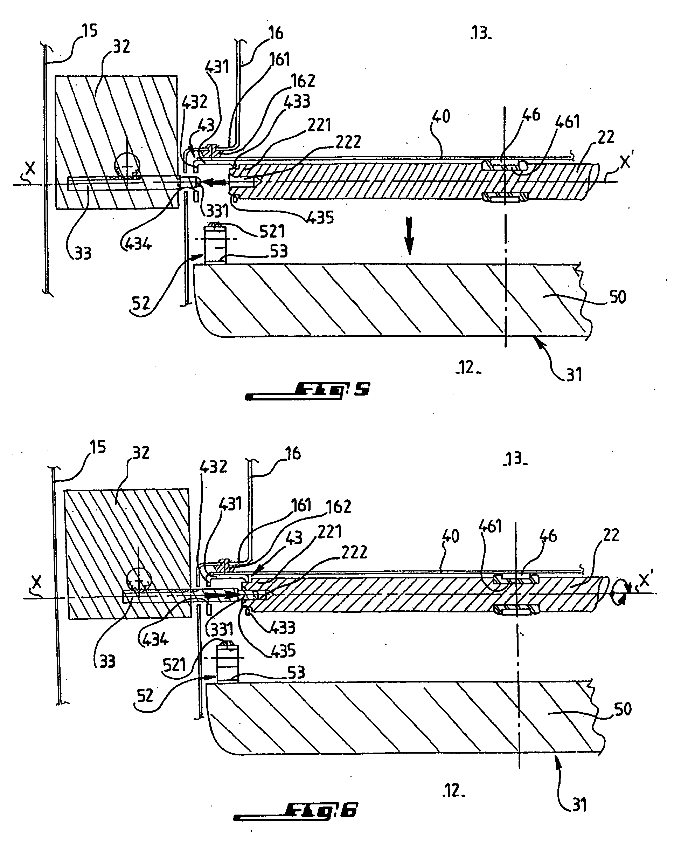

On notera que, dans sa première position de libération, le doigt 33 est engagé dans le second orifice de verrouillage 434. La plaque arrière 40 est ainsi maintenue en position alors que le coussin 50 peut basculer, comme le montre la figure 5.

Une fois le coussin 50 basculé vers l'avant, il est possible de déplacer le doigt 33 de telle sorte qu'il s'engage de nouveau dans l'orifice d'entraînement 222.

Le panneau 21 peut alors être pivoté vers le haut à l'aide du moteur de rotation 32 sans être gêné par le coussin 50.

On notera que des bagues en caoutchouc, non référencées, sont fixées à l'intérieur des premier et second orifices de verrouillage 53 et 434 pour guider le doigt 33 en translation et en rotation.

Par ailleurs, la première chape 52 porte une première butée 521, par exemple en caoutchouc, venant porter sur la partie centrale 431 de la seconde chape 43 quand le coussin 50 est en position normale, ce qui permet de définir précisément la position du premier orifice de verrouillage 53 relativement au doigt 33 et aux autres orifices.

De même, la plaque arrière 40 est normalement en appui par un bord latéral sur un épaulement 161 ménagé dans l'habillage latéral 16 au niveau du moteur de rotation 32. Une seconde butée 162, fixée à cet épaulement 161, est interposée entre le bord latéral de la plaque arrière 40 et l'épaulement 161. Cette butée est typiquement en caoutchouc.

Une bague 46 percée d'un orifice de guidage 461 cylindrique d'axe X-X', et formant pallier de guidage pour le premier axe 22, est fixée sur la face avant de la plaque arrière 40.

Le premier axe 22 traverse l'orifice de guidage 461 et est engagé dans celui-ci par une partie de diamètre réduit, de telle sorte que des épaulements de part et d'autre de l'orifice de guidage 461 bloquent le premier axe 22 en translation latérale relativement à la plaque 40.

Une bague en caoutchouc est interposée entre l'orifice de guidage 461 et le premier axe 22.

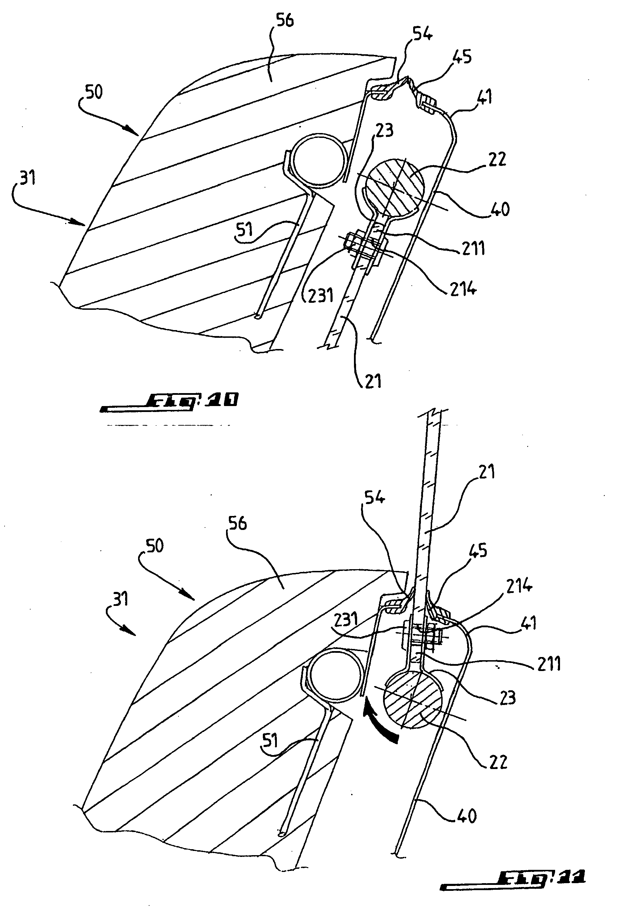

Comme le montrent les figures 10 et 11, le bord de liaison 211 du panneau 21 est rigidement fixé sur le premier axe 22 par l'intermédiaire de brides 23.

Ces brides 23 sont solidaires du premier axe 22 par un premier côté, et du bord de liaison 211 par un second côté opposé au premier. Le bord de liaison 211 est engagé entre les deux parties opposées de la bride 23, des écrous 231 traversant des trous 214 ménagés sur le bord de liaison 211 et les deux parties de la bride 23 et venant enserrer le bord de liaison entre les dites deux parties.

Les figures 10 et 11 montrent que la plaque arrière 40 comprend un joint 45 fixé sur son bord supérieur, le coussin 50 comprenant un joint complémentaire 54 fixé à l'armature 51.

Ces joints sont transversaux et parallèles et viennent mutuellement en contact quand le panneau 21 est dans sa position de rangement et le coussin 50 dans sa position normale (figure 10).

Ces joints sont en revanche plaqués sur deux faces mutuellement opposées du panneau 21 quand celui-ci occupe sa position d'isolement et le coussin 50 sa position normale (figure 11).

Les joints sont du type à lèvre, mais peuvent également être de tout autre type adapté.

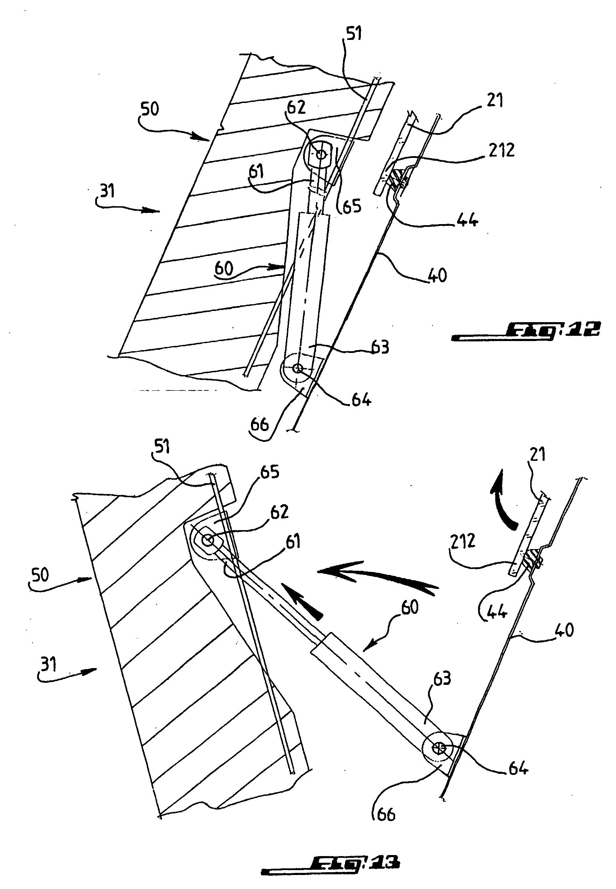

Les figures 12 et 13 montrent que le dossier 31 comprend un piston à gaz 60 faisant sélectivement pivoter le coussin 50 relativement à la partie inférieure de la plaque arrière40.

Le piston 60 est monté à rotation par une première extrémité 61 sur l'armature 51 du coussin 50 par un premier axe de pivotement 62 parallèle au premier axe de rotation 22, et est monté à rotation par une seconde extrémité 63 opposée à la première sur la plaque arrière 40 par un second axe de pivotement 63 parallèle au premier axe de rotation 22.

Le premier axe de pivotement 62 est supporté par des premiers flasques 65 rigidement fixés sur l'armature 51, et le second axe de pivotement 64 est supporté par des seconds flasques 66 rigidement fixés sur la face avant de la plaque 40.

Quand le coussin 50 est dans sa position normale contre la plaque arrière 40, le piston à gaz 60 est dans un état comprimé et sollicite le coussin 50 en rotation vers sa position de dégagement (figure 12). Ainsi, dès que le doigt 33 est dégagé du premier orifice de verrouillage 53, le piston à gaz 60 tend à faire pivoter le coussin 50.

Le piston à gaz 60 est dans son état détendu en position de dégagement du coussin (voir figure 13).

Enfin, on notera que le panneau 21, dans sa position de rangement, repose par un bord libre 212 opposé au bord de liaison 211 sur une troisième butée 44 solidaire de la plaque arrière 40.

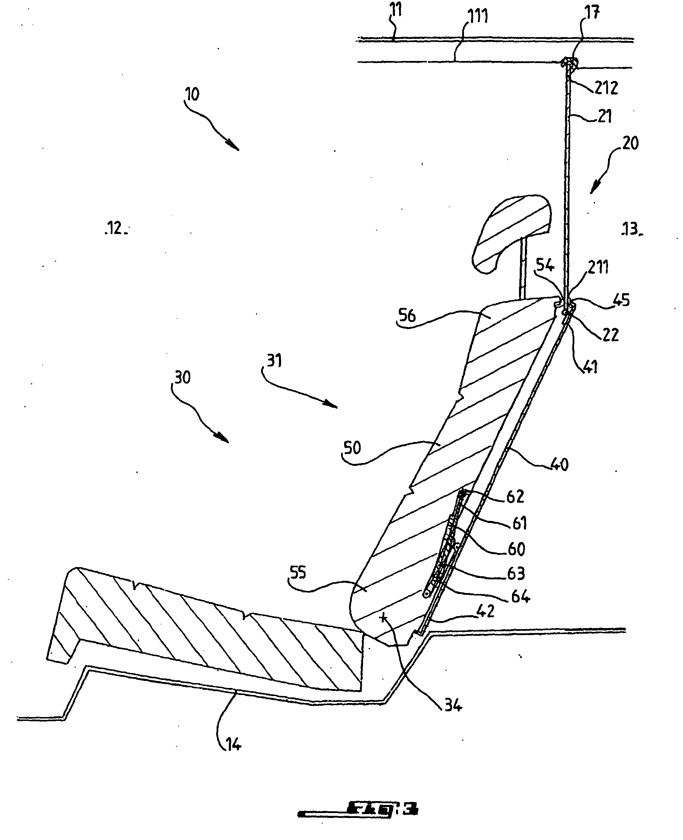

Au contraire, dans sa position d'isolement, le bord libre 212 vient s'insérer dans un joint d'isolement 17 fixé sur l'habillage de pavillon 111, comme on le voit sur la figure 3 .

Ce joint est porté par un épaulement, non référencé, formé dans l'habillage de pavillon 111, contre lequel le bord libre 212 vient en butée dans sa position d'isolement.

De manière similaire, des bords latéraux du panneau 21 viennent s'insérer dans des joints latéraux, non représentés, fixés sur l'habillage latéral du véhicule. Ces joints latéraux sont portés par des épaulements latéraux contre lesquels les bords latéraux du panneau viennent en butée en position d'isolement.

L'isolation entre les première et seconde parties 12 et 13 de l'habitacle est ainsi particulièrement efficace.

On comprend donc bien à la lecture de la description ci-dessus que le panneau peut être déployé et escamoté dans le dossier facilement. Ses mouvements de rotation sont commandés de façon très simple par un simple moteur électrique actionnant un doigt. De même, le verrouillage et le déverrouillage du coussin sont assurés de façon simple et économique par un autre moteur électrique entraînant le même doigt. Le nombre d'organes mécaniques est donc réduit au minimum.

Par ailleurs, le basculement du dossier du siège vers l'avant reste possible quand le panneau est escamoté dans le dossier.

Le verrouillage et le déverrouillage du coussin ou du dossier, et le déploiement ou l'escamotage du panneau, sont commandés depuis le tableau de bord du véhicule, de façon particulièrement commode.

## Revendications

1. Véhicule automobile comprenant un habitacle (10) délimité en partie haute par un pavillon (11) et divisé en une première partie (12) et une seconde partie (13), un siège (30) lié à la structure (14) du véhicule et disposé dans la première partie (12), et une cloison escamotable (20) isolant sélectivement la première partie (12) de la seconde partie (13), le siège (30) comprenant un dossier (31), ce dossier (31) comprenant lui-même une plaque arrière (40), et un coussin (50) disposé en regard de la plaque arrière (40) et lié à cette plaque , ladite cloison escamotable (20) comprenant un panneau (21) sélectivement mobile entre une position de rangement dans laquelle le panneau (21) est escamoté entre le coussin (50) et la plaque arrière (40) du dossier, et une position d'isolement dans laquelle le panneau (21) se dresse entre la plaque arrière (40) et le pavillon (11), **caractérisé en ce que** le panneau (21) passe de sa position de rangement à sa position d'isolement par pivotement relativement à une partie supérieure de la plaque arrière (40), et par pivotement du coussin relativement à une partie inférieure de la plaque arrière (40).

2. Véhicule selon la revendication 1, **caractérisé en ce que** le panneau (21) est solidaire d'un premier axe (22) monté à rotation sur un bord supérieur (41) de la plaque arrière (40) du dossier (31).

3. Véhicule selon la revendication 2, **caractérisé en ce que** le premier axe (22) présente un premier axe de symétrie (X-X') et comprend à une première extrémité axiale (221) un orifice d'entraînement (222) s'étendant selon le premier axe de symétrie (X-X'), le véhicule comprenant un moteur de rotation (32), et un doigt (33) s'étendant selon le premier axe de symétrie (X-X') et entraîné en rotation par le moteur de rotation (32) autour du premier axe de symétrie (X-X'), ce doigt (33) étant engagé dans l'orifice d'entraînement (222) et coopérant avec celui-ci pour entraîner le premier axe (22) en rotation.

4. Véhicule selon l'une quelconque des revendications 2 à 3, **caractérisé en ce que** le coussin (50) est monté à rotation sur la structure (14) du véhicule par un deuxième axe (34) parallèle au premier axe (22) et disposé à proximité d'un bord inférieur (42) de la plaque arrière (40).

5. Véhicule selon la revendication 4, **caractérisé en ce que** le coussin (50) comprend une armature (51) et une première chape (52) solidaire de l'armature (51) et percée d'un premier orifice de verrouillage (53), le doigt (33) étant mobile en translation suivant le premier axe de symétrie (X-X') entre une position de verrouillage dans laquelle le doigt (33) est engagé dans le premier orifice de verrouillage (53), et une première position de libération dans laquelle le doigt (33) n'est pas engagé dans le premier orifice de verrouillage (53) et le coussin (50) peut pivoter autour du deuxième axe (34).

6. Véhicule selon la revendication 5, **caractérisé en ce que** la plaque arrière (40) est articulée sur le deuxième axe (34) par son bord inférieur (42) et porte une seconde chape (43) comprenant un second orifice de verrouillage (434), le doigt (33) étant, dans sa position de verrouillage, engagé simultanément dans les premier et second orifices de verrouillage (53, 434) et dans l'orifice d'entraînement (222), et étant mobile en translation suivant le premier axe de symétrie (X-X') jusqu'à une seconde position de libération dans laquelle le doigt (33) n'est engagé dans aucun des premier et second orifices de verrouillage (53, 434) ni dans l'orifice d'entraînement (222), ce qui permet le basculement du dossier (31) du siège (30).

7. Véhicule selon la revendication 6, **caractérisé en ce que,** dans sa première position de libération, le doigt (33) est engagé dans le second orifice de verrouillage (434).

8. Véhicule selon l'une quelconque des revendications 5 à 7, **caractérisé en ce que** le dossier (31) comprend un piston (60) sollicitant le coussin (50) en rotation relativement à la partie inférieure de la plaque arrière (40), ce piston étant monté à rotation par une première extrémité (61) sur l'armature (51) du coussin (50) par un premier axe de pivotement (62) parallèle au premier axe de rotation (22), et étant monté à rotation par une seconde extrémité (63) opposée à la première sur la plaque arrière (40) par un second axe de pivotement (64) parallèle au premier axe de rotation (22).

9. Véhicule selon l'une quelconque des revendications 5 à 8, **caractérisé en ce que** la plaque arrière (40) comprend un joint (45) fixé sur son bord supérieur (41), le coussin (50) comprenant un joint complémentaire (54) fixé à l'armature (51), ces joints étant mutuellement en contact quand le panneau (21) est dans sa position de rangement, et étant plaqués sur deux faces mutuellement opposées du panneau (21) quand celui-ci occupe sa position d'isolement.

10. Véhicule selon l'une quelconque des revendications 2 à 9, **caractérisé en ce que** le panneau (21) est solidaire du premier axe (22) par un bord de liaison (211), et, dans sa position de rangement, repose par un bord libre (212) opposé au bord de liaison (211) sur une troisième butée (44) solidaire de la plaque arrière (40).

## Claims

1. Motor vehicle comprising a passenger compartment (10) bounded at the top by a roof (11) and divided into a first section (12) and a second section (13), a seat (30) connected to the structure (14) of the vehicle and arranged in the first section (12), and a retractable partition (20) selectively isolating the first section (12) from the second section (13), the seat (30) comprising a backrest (31), this backrest (31) itself comprising a rear plate (40), and a cushion (50) arranged opposite the rear plate (40) and connected to this plate, the said retractable partition (20) comprising a panel (21) selectively moveable between a stowed position in which the panel (21) is retracted between the cushion (50) and the rear plate (40) of the backrest, and an isolating position in which the panel (21) is straightened up between the rear plate (40) and the roof (11), **characterized in that** the panel (21) passes from its stowed position to its isolating position by pivoting relative to an upper portion of the rear plate (40), and by the cushion pivoting relative to a lower portion of the rear plate (40).

2. Vehicle according to Claim 1, **characterized in that** the panel (21) is secured to a first axle (22) rotatably mounted on an upper edge (41) of the rear plate (40) of the backrest (31).

3. Vehicle according to Claim 2, **characterized in that** the first axle (22) has a first axis of symmetry (X-X') and comprises, at a first axial end (221), a drive orifice (222) extending along the first axis of symmetry (X-X'), the vehicle comprising a rotating motor (32), and a pin (33) extending along the first axis of symmetry (X-X') and driven to rotate by the rotating motor (32) about the first axis of symmetry (X-X'), this pin (33) being engaged in the drive orifice (222) and cooperating therewith in order to drive the first axle (22) to rotate.

4. Vehicle according to either one of Claims 2 and 3, **characterized in that** the cushion (50) is rotatably mounted on the structure (14) of the vehicle by a second axle (34) which is parallel to the first axle (22) and arranged in the vicinity of a lower edge (42) of the rear plate (40).

5. Vehicle according to Claim 4, **characterized in that** the cushion (50) comprises a reinforcement (51) and a first clevis (52) which is secured to the reinforcement (51) and pierced with a first locking orifice (53), the pin (33) being moveable translationally along the first axis of symmetry (X-X') between a locking position in which the pin (33) is engaged in the first locking orifice (53), and a first release position in which the pin (33) is not engaged in the first locking orifice (53) and the cushion (50) can pivot about the second axle (34).

6. Vehicle according to Claim 5, **characterized in that** the rear plate (40) is articulated on the second axle (34) by its lower edge (42) and bears a second clevis (43) comprising a second locking orifice (434), the pin (33), in its locking position, being simultaneously engaged in the first and second locking orifices (53, 434) and in the drive orifice (222), and being moveable translationally along the first axis of symmetry (X-X') as far as a second release position in which the pin (33) is engaged in neither of the first and second locking orifices (53, 434) nor in the drive orifice (222), thereby allowing the backrest (31) of the seat (30) to tilt.

7. Vehicle according to Claim 6, **characterized in that**, in its first release position, the pin (33) is engaged in the second locking orifice (434).

8. Vehicle according to any one of Claims 5 to 7, **characterized in that** the backrest (31) comprises a piston (60) urging the cushion (50) to rotate relative to the lower portion of the rear plate (40), this piston being rotatably mounted at a first end (61) on the reinforcement (51) of the cushion (50) by a first pivot axle (62) which is parallel to the first rotation axle (22), and being rotatably mounted at a second end (63), opposed to the first end, on the rear plate (40) by a second pivot axle (64) which is parallel to the first rotation axle (22).

9. Vehicle according to any one of Claims 5 to 8, **characterized in that** the rear plate (40) comprises a seal (45) fastened to its upper edge (41), the cushion (50) comprising a complementary seal (54) fastened to the reinforcement (51), these seals being mutually in contact when the panel (21) is in its stowed position, and being pressed against two mutually opposed surfaces of the panel (21) when this panel occupies its isolating position.

10. Vehicle according to any one of Claims 2 to 9, **characterized in that** the panel (21) is secured to the first axle (22) by a connecting edge (211), and, in its stowed position, rests by a free edge (212), opposed to the connecting edge (211), against a third abutment (44) secured to the rear plate (40).

## Patentansprüche

1. Kraftfahrzeug mit einer Fahrgastzelle (10), die im oberen Abschnitt durch einen Dachhimmel (11) begrenzt ist und in einen ersten Abschnitt (12) und einen zweiten Abschnitt (13) unterteilt ist, einem Sitz (30), der mit der Struktur (14) des Fahrzeugs verbunden ist und im ersten Abschnitt (12) angeordnet ist, und einer einfahrbaren Trennwand (20), die selektiv den ersten Abschnitt (12) vom zweiten Abschnitt (13) trennt, wobei der Sitz (30) eine Rückenlehne (31) aufweist, wobei die Rückenlehne (31) eine rückseitige Platte (40) und ein Polster (50) aufweist, das gegenüber der rückseitigen Platte (40) angeordnet und mit der Platte verbunden ist, wobei die einfahrbare Trennwand (20) eine Tafel (21) aufweist, die selektiv zwischen einer Stellung der Unterbringung, in der die Tafel (21) zwischen dem Polster (50) und der rückseitigen Platte (40) der Rückenlehne eingefahren ist, und einer Stellung der Abtrennung, in der die Tafel (21) zwischen der rückseitigen Platte (40) und dem Dachhimmel (11) aufgerichtet steht, beweglich ist, **dadurch gekennzeichnet, dass** die Tafel (21) durch eine Verschwenkung in Bezug auf einen oberen Abschnitt der rückseitigen Platte (40) und eine Verschwenkung des Polsters in Bezug auf einen unteren Abschnitt der rückseitigen Platte (40) von der Stellung der Unterbringung in die Stellung der Abtrennung gebracht wird.

2. Fahrzeug nach Anspruch 1, **dadurch gekennzeichnet, dass** die Tafel (21) mit einer ersten Achse (22) fest verbunden ist, die drehbar an einem oberen Rand (41) der rückseitigen Platte (40) der Rückenlehne (31) angebracht ist.

3. Fahrzeug nach Anspruch 2, **dadurch gekennzeichnet, dass** die erste Achse (22) eine erste Symmetrieachse (X-X') aufweist und an einem ersten axialen Ende (221) eine Antriebsöffnung (222) aufweist, die sich entlang der ersten Symmetrieachse (X-X') erstreckt, wobei das Fahrzeug einen Drehmotor (32) und einen Finger (33), der sich entlang der ersten Symmetrieachse (X-X') erstreckt und vom Drehmotor (32) zur Drehung um die erste Symmetrieachse (X-X') angetrieben wird, aufweist, wobei der Finger (33) in der Antriebsöffnung (222) in Eingriff ist und mit dieser zusammenwirkt, um die erste Achse (22) zur Drehung anzutreiben.

4. Fahrzeug nach einem der Ansprüche 2 oder 3, **dadurch gekennzeichnet, dass** das Polster (50) über eine zweite Achse (34), die parallel zur ersten Achse (22) verläuft und in der Nähe eines unteren Rands (42) der rückseitigen Platte (40) angeordnet ist, drehbar an der Struktur (14) des Fahrzeugs angebracht ist.

5. Fahrzeug nach Anspruch 4, **dadurch gekennzeichnet, dass** das Polster (50) ein Gestell (51) und einen ersten Gabelkopf (52) aufweist, der fest mit dem Gestell (51) verbunden und von einer ersten Verriegelungsöffnung (53) durchbohrt ist, wobei der Finger (33) in Translation der ersten Symmetrieachse (X-X') folgend zwischen einer Verriegelungsstellung, in der der Finger (33) in der ersten Verriegelungsöffnung (53) in Eingriff ist, und einer ersten Freigabestellung, in der der Finger (33) nicht in der ersten Verriegelungsöffnung (53) in Eingriff ist und das Polster (50) um die zweite Achse (34) schwenken kann, beweglich ist.

6. Fahrzeug nach Anspruch 5, **dadurch gekennzeichnet, dass** die rückseitige Platte (40) über ihren unteren Rand (42) mit der zweiten Achse (34) beweglich verbunden ist und einen zweiten Gabelkopf (43) trägt, der eine zweite Verriegelungsöffnung (434) aufweist, wobei der Finger (33) in seiner Verriegelungsstellung gleichzeitig in der ersten und in der zweiten Verriegelungsöffnung (53, 434) und in der Antriebsöffnung (222) in Eingriff ist und in Translation der ersten Symmetrieachse (X-X') folgend bis zu einer zweiten Freigabestellung beweglich ist, in der der Finger (33) weder in der ersten noch in der zweiten Verriegelungsöffnung (53, 434) noch in der Antriebsöffnung (222) in Eingriff ist, was das Umklappen der Rückenlehne (31) des Sitzes (30) ermöglicht.

7. Fahrzeug nach Anspruch 6, **dadurch gekennzeichnet, dass** der Finger (33) in seiner ersten Freigabestellung in der zweiten Verriegelungsöffnung (434) in Eingriff ist.

8. Fahrzeug nach einem der Ansprüche 5 bis 7, **dadurch gekennzeichnet, dass** die Rückenlehne (31) einen Kolben (60) aufweist, der das Polster (50) zur Drehung in Bezug auf den unteren Abschnitt der rückseitigen Platte (40) bringt, wobei der Kolben über ein erstes Ende (61) durch eine erste Schwenkachse (62), die parallel zur ersten Drehachse (22) verläuft, drehbar am Gestell (51) des Polsters (50) angebracht ist und über ein dem ersten Ende gegenüberliegendes zweites Ende (63) durch eine zweite Schwenkachse (64), die parallel zur ersten Drehachse (22) verläuft, drehbar an der rückseitigen Platte (40) angebracht ist.

9. Fahrzeug nach einem der Ansprüche 5 bis 8, **dadurch gekennzeichnet, dass** die rückseitige Platte (40) eine Dichtung (45) aufweist, die an ihrem oberen Rand (41) angebracht ist, wobei das Polster (50) eine komplementäre Dichtung (54) aufweist, die am Gestell (51) angebracht ist, wobei die Dichtungen zueinander in Kontakt stehen, wenn die Tafel (21) in der Stellung der Unterbringung angeordnet ist, und an zwei entgegengesetzte Seiten der Tafel (21) gedrückt sind, wenn sie ihre Stellung der Abtrennung einnimmt.

10. Fahrzeug nach einem der Ansprüche 2 bis 9, **dadurch gekennzeichnet, dass** die Tafel (21) über einen Verbindungsrand (211) fest mit der ersten Achse (22) verbunden ist und in der Stellung der Unterbringung mit einem freien Rand (212), der dem Verbindungsrand (211) gegenüberliegt, auf einem dritten Anschlag (44) aufliegt, der mit der rückseitigen Platte (40) fest verbunden ist.
